Europäisches Patentamt

**European Patent Office**

**Office européen des brevets**

(19)

(11) Veröffentlichungsnummer: **0 004 638**
**B1**

(12) # EUROPÄISCHE PATENTSCHRIFT

(45) Veröffentlichungstag der Patentschrift:
14.04.82

(51) Int. Cl.³: **A 22 C 13/00**

(21) Anmeldenummer: 79100935.0

(22) Anmeldetag: 28.03.79

(54) Stützhülle aus Netzschlauch mit Hohlstab aus längswelse gerafftem Schlauch im Stützhüllenhohlraum und Verfahren zu ihrer Herstellung.

(30) Priorität: 06.04.78 DE 2814826

(43) Veröffentlichungstag der Anmeldung:
17.10.79 Patentblatt 79/21

(45) Bekanntmachung des Hinweises auf die Patenterteilung:
14.04.82 Patentblatt 82/15

(84) Benannte Vertragsstaaten:
BE DE FR GB

(56) Entgegenhaltungen:
FR-A-2 291 015

(73) Patentinhaber: HOECHST AKTIENGESELLSCHAFT,
KALLE Niederlassung der Hoechst AG Patentabteilung
Postfach 3540,
Rheingaustrasse 190 D-6200 Wiesbaden 1 (DE)

(72) Erfinder: Lenhart, Richard, Dahlemweg 4,
D-6200 Wiesbaden-Frauenstein (DE)
Erfinder: Köstner, Armin, Am Hohen Stein 36,
D-6200 Wiesbaden (DE)
Erfinder: Hellbauer, Horst, Schützenpfad 34,
D-6507 Ingelheim (DE)

# Stützhülle aus Netzschlauch mit Hohlstab aus längsweise gerafftem Schlauch im Stützhüllenhohlraum und Verfahren zu ihrer Herstellung

Die Erfindung bezieht sich auf eine Stützhülle und einem im Stützhüllenhohlraum angeordneten Hohlstab von der im Oberbegriff des Anspruchs 1 genannten Art und ein Verfahren zur Herstellung einer funktionellen Einheit aus Hohlstab und Stützhülle von der im Oberbegriff des Anspruchs 3 genannten Art.

Hohlstäbe aus längsweise geraffter Schlauchhülle werden insbesondere bei der Wurstherstellung verwendet. An einem Ende verschlossene Hohlstäbe werden dabei auf das Füllrohr einer Maschine zum Abfüllen von Wurstmasse geschoben. Durch Auspressen von Wurstmasse durch das Füllrohr wird dann die den Hohlstab bildende Schlauchhülle – unter stetiger Entfältelung – mit Wurstmasse gefüllt.

Vor ihrer bestimmungsgemässen Verwendung werden die Hohlstäbe üblicherweise gewässert.

Wasserfeuchte Hohlstäbe haben die Tendenz, sich in längsaxialer Richtung erheblich auszudehnen, wobei Formbeständigkeit der ursprünglichen Hohlstäbe nach Wässerung derselben nicht mehr gegeben ist.

Aus der FR-A 2 291 015 ist bereits eine Stützhülle aus Kunststoffschlauch mit im Stützhüllenhohlraum angeordnetem Hohlstab aus längsweise gerafftem Schlauch bekannt, wobei die Stützhülle den Hohlstab allseitig, jedoch unter Freilassung seiner Mündungsöffnungen umschliesst und bei dem die wärmegeschrumpften Stützhüllenstirnwände jeweils von Kreisringwülsten begrenzte Mündungsöffnungen aufweisen.

Diese Druckschrift beschreibt auch ein Verfahren mit den im Oberbegriff des Anspruchs 3 genannten Merkmalen.

Bei dieser bekannten Ausführungsform liegt die Stützhülle am Hohlstab allseitig, d.h. sowohl über dessen Enden als auch auf dessen gesamtem Umfang, unter Schrumpfspannung an, so dass sie eine Längenausdehnung des Hohlstabs beim Wässern infolge Quellung nicht oder nur sehr geringfügig zulässt. Ferner besteht diese bekannte Stützhülle aus einer Kunststoffolie, so dass eine allseitige Befeuchtung des eingeschlossenen Hohlstabs nur schwierig erreicht werden kann.

Ausgehend von diesem Stand der Technik liegt der Erfindung die Aufgabe zugrunde, eine Stützhülle für einen Hohlstab aus längsweise gerafftem Schlauch, insbesondere für einen Hohlstab aus faserverstärktem Cellulosehydratschlauch, der eingangs genannten Art sowie ein Herstellungsverfahren vorzuschlagen, die eine allseitige Befeuchtung des Hohlstabs zulässt und die Formstabilität des Hohlstabs nach seiner Wässerung in der Stützhülle gewährleistet und die bestimmungsgemäss verwendet werden kann, ohne dass die Stützhülle ganz oder teilweise vom Hohlstab entfernt werden muss.

Die der Erfindung zugrundeliegende Aufgabe wird gelöst durch eine Stützhülle mit den im Anspruch 1 genannten Merkmalen sowie durch das im Anspruch 3 angegebene Verfahren.

Die Stützhülle besteht aus einem Netzschlauch aus thermoplastischem latent wärmeschrumpffähigem Kunststoff, insbesondere solchem auf Basis von Polyäthylen. Die dem Netzschlauch innewohnende Wärmeschrumpffähigkeit ist durch Wärmeeinwirkung hinreichender Temperatur auslösbar. Die Wärmeschrumpfung des Netzschlauchs führt zur Längenverkürzung und Durchmesserverringerung bei entsprechender Dickenzunahme.

Der Netzschlauch weist eine gewisse längsaxiale Dehnbarkeit auf, die eine geringfügige Längenausdehnung der gewässerten Schlauchhülle im Behälterhohlraum zulässt. Dies ist für eine optimale Befeuchtung des Hohlstabs wesentlich.

Die Stützhülle bildet einen geraden, hohlzylindrischen, im Querschnitt kreisförmigen einstückigen behälterförmigen Netzschlauch mit integralen Stirnwänden. In diesen Stirnwänden des Netzschlauchs sind jeweils Öffnungen vorgesehen, die jeweils durch Kreisringwülste begrenzt sind. Die Kreisringwülste sind integrale Bestandteile dieser Stirnwände und entstehen bei der Herstellung der Stützhülle durch Wärmeschrumpfung der Überstände des Netzschlauchs auf und um die aus dem Hohlraum des Hohlstabs jeweils endseitig herausragenden Teile des Stützdorns.

Der Kreisdurchmesser der Öffnung des Netzschlauchs in den Stirnwänden entspricht etwa dem Innendurchmesser des Hohlstabs oder ist geringfügig kleiner. Die durch Kreisringwülste begrenzten Öffnungen des Netzschlauchs in den Stirnwänden sind jeweils zentrisch und derart zueinander angeordnet, dass die Mittelpunkte der Kreisringwülste auf der Symmetrielängsachse des Hohlraums des Netzschlauchs liegen. Die Öffnungen des Netzschlauchs in den Stirnwänden sind jeweils gleich dimensioniert.

Der innere Durchmesser des Netzschlauchs ist geringfügig grösser als der Aussendurchmesser des von dem Netzschlauch umschlossenen Hohlstabs, so dass der Netzschlauch demnach mit Spiel an die Aussenseite des Hohlstabs angrenzt.

Die Länge des den Hohlstab allseitig umschliessenden Netzschlauchs ist derartig dimensioniert, dass der Netzschlauch an die Stirnflächen des Hohlstabs in seinem Hohlraum angrenzt.

Hohlstäbe aus längsweise gerafftem Schlauch, beispielsweise aus faserverstärktem Cellulosehydrat, sowie Verfahren zur Herstellung derartiger Hohlstäbe sind bekannt und nicht Gegenstand der Erfindung. Aus verfahrensökonomischen Gründen werden als Verpackungsmaterial verwendete Schläuche, insbesondere solche, die zur Verpackung von Wurstmasse als künstliche Wursthüllen verwendet werden, in einer Länge von etwa 25 bis 35 m vor ihrer Befüllung mit Füllgut durch längsweises Raffen gegen ein Widerlager unter Faltenbildung in hohlstabförmige Gebilde übergeführt, deren Länge etwa einem Hundertstel der Länge des ursprünglichen Schlauchs entspricht.

Bei der Handhabung der Hohlstäbe bei ihrer bestimmungsgemässen Verwendung besteht die Gefahr, dass die Hohlstäbe durch mechanische Einwirkungen stark expandieren. Hohlstäbe mit diese umgebenden Stützhüllen sind diesen Gefahren nicht ausgesetzt. Hohlstäbe aus längsweise geraffter Schlauchhülle aus Cellulosehydrat werden vor ihrer bestimmungsgemässen Verwendung üblicherweise gewässert. Wasserfeuchte Hohlstäbe aus längsweise gerafftem Cellulosehydratschlauch haben infolge der starken Quelltendenz des Schlauchmaterials die Eigenschaft, sich in unerwünschter Weise längsaxial beachtlich auszudehnen, was dazu führt, dass die Hohlstäbe bei ihrer Weiterverarbeitung schwer handhabbar werden und leicht knicken bzw. leicht beschädigt werden.

Bei der Verwendung des Hohlstabs wird dieser auf das Füllrohr einer Maschine zum Abfüllen von Füllgut, beispielsweise Wurstmasse, aufgeschoben. Die Wurstmasse wird dann durch das Füllrohr in den an einem Ende verschlossenen Hohlstab – in Richtung auf das verschlossene Ende zu – eingepresst, wodurch der Hohlstab nach Massgabe der eingepressten Füllgutmenge fortlaufend entfältelt und der Schlauch mit Füllgut befüllt wird.

Der bei dem Verfahren gemäss Anspruch 3 verwendete Stützdorn ist ein formfester, gerader, im Querschnitt kreisförmiger Körper, dessen Aussendurchmesser kleiner – vorteilhaft geringfügig kleiner – ist als der Durchmesser des Hohlraums des Hohlstabs. Der Stützdorn weist eine Länge derart auf, dass er – im Hohlraum des Hohlstabs angeordnet – aus beiden Mündungsöffnungen desselben jeweils gleich lang und hinreichend weit herausragt.

Unter Bezeichnung «Anordnen» des Hohlstabs im Netzschlauch soll sowohl das Einschieben des Hohlstabs in den Hohlraum des Netzschlauchs als auch das Aufschieben des Netzschlauchs auf und über den Hohlstab verstanden werden.

Der Ausdruck «Entfernen» des geraden Stützdorns aus dem Hohlraum des Hohlstabs soll sowohl Herausziehen des Stützdorns aus dem Hohlraum als auch Herunterziehen bzw. -schieben des vom Netzschlauch ummantelten Hohlstabs vom Stützdorn bedeuten.

Die Länge des Netzschlauchs wird derart gewählt, dass gleich lange Überstände des Netzschlauchs jeweils über die Enden des im Hohlraum des Netzschlauchs befindlichen Hohlstabs überstehen.

Nach Wärmebeaufschlagung der Überstände des Netzschlauchs schrumpfen diese unter Längen- und Durchmesserverkürzung und bilden Stirnwände mit Öffnungen, die von Kreisringwülsten begrenzt werden.

Nachfolgend wird die Herstellungsweise des Erfindungsgegenstandes beispielhaft und im einzelnen beschrieben.

Ausgangsmaterial zur Herstellung des Behälters ist ein wärmeschrumpffähiger flexibler Netzschlauch aus Polyäthylen.

Zunächst wird ein an sich bekannter Hohlstab aus längsweise geschafftem Schlauch auf einen formfesten Stützdorn in Gestalt eines im Querschnitt kreisförmigen Stabs aufgeschoben. Die Länge des Stabs ist dabei derart bemessen, dass er beidseitig aus dem Hohlraum des Hohlstabs herausragt und seine herausragenden Teile jeweils gleich lang sind.

Der Durchmesser des Stützdorns ist nur geringfügig kleiner als der Innendurchmesser des Hohlstabs.

Um den Hohlstab wird dann der latent wärmeschrumpffähige Netzschlauch aus Polyäthylen angeordnet. Dazu geht man von einem Netzschlauchabschnitt aus, der länger als der Hohlstab ist, so dass der Netzschlauch beidseitig hinreichend weit über die Hohlstabenden hinausragt. Die Überstände des Netzschlauchs sind dabei vorteilhaft gleich lang.

Der Durchmesser des Netzschlauchs wird dabei so gewählt, dass dieser nur wenig grösser ist als der Aussendurchmesser des Hohlstabs.

Die ursprüngliche Länge der Überstände des Netzschlauchs liegt im Bereich zwischen der Länge des Hohlstabdurchmessers und der des Hohlstabradius. Bei der beispielhaften Verfahrensdurchführung entspricht die Länge der Überstände jeweils dem Hohlstabdurchmesser.

Man lässt dann auf die Überstände des Netzschlauchs Wärme einer Temperatur einwirken, die hinreicht, um ihre Wärmeschrumpfung zu bewirken. Diese Wärmeeinwirkung erfolgt dabei unter Bedingungen, die verhindern, dass Wärmebeaufschlagung des an die Aussenseite des Hohlstabs, d.h. an dem Hohlstabumfang, angrenzenden Netzschlauchhüllenteils erfolgt. Dies kann beispielsweise dadurch erfolgen, dass man den genannten Netzschlauchbereich durch Abdeckung dem Einfluss von Wärme entzieht.

Durch die beim Schrumpfen der Überstände des Netzschlauchs eintretende Längen- und Durchmesserverkürzung unter zugleicher Dickenzunahme des sie bildenden Netzschlauchs, legen sich die Überstände jeweils an die Stirnflächen des Hohlstabs an und – abhängig von der ursprünglichen Länge der Überstände – zugleich auch mehr oder minder weit an die Oberfläche des Stützdorns.

Die an die Aussenseite des Stützdorns angrenzenden verdickten Bereiche der Überstände werden in warmformbarem Zustand in Richtung auf die Stirnflächen des Hohlstabs gestaucht. Hierzu wird unmittelbar nach erfolgter Wärmeschrumpfung jeweils ein Stempelelement mit kreisringförmiger Stempelfläche und einem inneren Kreisringdurchmesser, der nur geringfügig grösser ist als der Durchmesser des Stützdorns, über diesen und in Richtung auf die Stirnflächen des Hohlstabs bewegt. Dabei wird der wärmegeschrumpfte Überstand des Netzschlauchs fest an die Stirnflächen des Hohlstabs angepresst.

Nach Abkühlung der wärmebeaufschlagten Netzschlauchbereiche auf Zimmertemperatur wird der Stützdorn aus dem Hohlraum des Hohlstabs herausgezogen.

Die Wärmeeinwirkung auf die Überstände des Netzschlauchs kann bei der Verfahrensdurchführung beispielsweise mit Hilfe von Infrarotwärme abgebenden Strahlern erfolgen. Durch die partielle Wärmebeaufschlagung des Netzschlauchs um den Hohlstab ist gewährleistet, dass der Netzschlauch am Umfang des Hohlstabs nicht schrumpft.

Die integralen Stirnwände des Netzschlauchs wirken als Verstärkungselemente des Netzschlauchs, insbesondere wirken sie erfolgreich der Presskraft des sich längsaxial ausdehnenden gewässerten Hohlstabs entgegen.

Der von dem erfindungsgemässen Netzschlauch umgebene Hohlstab kann unmittelbar auf das Füllrohr einer Abfüllmaschine für Füllgut aufgeschoben werden, ohne dass man zuvor, wie dies bei bekannten Stützhüllen erforderlich ist, diese vom Hohlstab entnehmen oder ihre endseitigen Verschlüsse entfernen muss, um das Füllrohr in den Hohlraum des Hohlstabs einführen zu können.

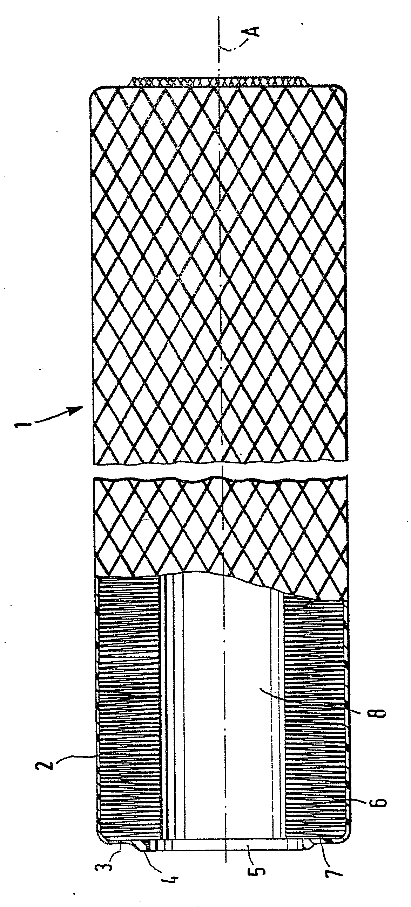

Die Erfindung wird durch die Zeichnung beispielhaft erläutert:

Die Figur der Zeichnung stellt in Seitenansicht, teilweise im Schnitt, die Stützhülle mit Hohlstab im Hohlraum der Stützhülle dar.

Die funktionelle Einheit 1 besteht aus Netzschlauch 2 und Hohlstab 6 im Hohlraum des Netzschlauchs 2. An der integralen Stirnwand 3 des Netzschlauchs 2 befindet sich der Kreisringwulst 4, der die Öffnung 5 des Netzschlauchs 2 umgibt. Mit 7 ist die Stirnfläche des Hohlstabs 6 und mit 8 dessen Hohlraum bezeichnet. Die strichpunktierte gerade Linie A ist die Symmetrielängsachse der Stützhülle.

## Patentansprüche

1. Stützhülle aus Kunststoffschlauch mit im Stützhüllenhohlraum angeordnetem Hohlstab (6) aus längsweise gerafftem Schlauch, wobei die aus unter Wärmeeinwirkung schrumpfendem Material bestehende Stützhülle den Hohlstab (6) allseitig unter Ausbildung von Stirnwänden (3), jedoch unter Freilassung seiner Mündungsöffnungen umschliesst und bei dem die wärmegeschrumpften Stützhüllenstirnwände (3) jeweils von Kreisringwülsten (4) begrenzte Öffnungen (5) aufweisen, dadurch gekennzeichnet, dass die Stützhülle aus einem Netzschlauch (2) besteht, dass der an den Hohlstabumfang angrenzende Stützhüllenbereich schrumpfspannungsfrei ist, und dass die Kreisringwülste (4) jeweils längsaxial gestaucht sind.

2. Stützhülle nach Anspruch 1, dadurch gekennzeichnet, dass die Stützhülle aus wärmeschrumpffähigem Polyäthylen-Netzschlauch (2) besteht.

3. Verfahren zur Herstellung einer funktionellen Einheit (1), bestehend aus einem Hohlstab (6) aus längsweise gerafftem Schlauch und einer schlauchförmigen Stützhülle aus latent wärmeschrumpffähigem Material, welche den Hohlstab (6) unter Freilassung seiner Mündungsöffnungen allseitig umgibt, bei dem man den Hohlstab (6) auf einen Stützdorn aufschiebt, der länger als der Hohlstab (6) ist, um den Hohlstab die Stützhülle anordnet, wobei der Hohlstab (6) beidseitig von der Stützhülle überragt wird, und auf die Stützhüllenüberstände deren Schrumpfung bewirkende Wärme einwirken lässt, dadurch gekennzeichnet, dass man um den Hohlstab (6) einen Netzschlauch (2) als Stützhülle anordnet, lediglich auf die Überstände des Netzschlauchs (2) Schrumpfung bewirkende Wärme einwirken lässt, die Überstände gegen die Stirnflächen (7) des Hohlstabs (6) presst und danach den Stützdorn aus dem Hohlraum (8) des Hohlstabs (6) entfernt.

## Claims

1. A support sheathing comprised of a plastic tubing, which contains in its cavity a hollow stick (6) made of a lengthwise shirred tubing, whereby the support sheathing made of a heat-shrinkable material encloses the hollow stick (6) on all sides, thereby forming end walls (3) which leave free the openings of the cavity of the hollow stick, and whereby the heat-shrunk end walls (3) of the support sheathing leave free openings (5) which are limited by annular beads (4), said support sheathing being characterized in that it is comprised of a tubular net (2), that the part of the support sheathing which is adjacent to the circumferential surface of the hollow stick does not exert any strain due to shrinkage, and that each of the annular beads (4) is compressed in the direction of the longitudinal axis.

2. A support sheathing as claimed in claim 1, characterized in that it is made of a heat-shrinkable tubular net (2) of polyethylene.

3. A process for the manufacture of a functional unit (1) comprising a hollow stick (6) made of a lengthwise shirred tubing and a tubular support sheathing composed of a material having latent shrinkability, which encloses the hollow stick (6) on all sides, leaving free the openings of its cavity, wherein the hollow stick (6) is pushed upon a supporting mandrel which is longer than the hollow stick (6), the support sheathing is arranged around the hollow stick (6) so that it projects beyond the hollow stick (6) at both ends, heat which causes shrinkage of the tubular net is allowed to act upon these ends, said process being characterized in that a tubular net (2) is arranged around the hollow stick (6) as a support sheathing, that heat which causes shrinkage is allowed to act on the projecting parts of the tubular net (2) only, that the projecting ends of the tubular net (2) are pressed against the end faces (7) of the hollow stick (6), and that the supporting mandrel is then removed from the cavity (8) of the hollow stick (6).

## Revendications

1. Gaine de renforcement tubulaire en matière synthétique thermorétractible qui, dans sa cavité, reçoit une tige creuse (6) plissée sur toute sa longueur et qui, après sa rétraction sous l'effet de la chaleur, enrobe la tige creuse (6) à l'exception de ses ouvertures frontales, alors que les faces frontales (3) de la gaine de renforcement obtenues sous l'effet de la rétraction thermique comportent ainsi des ouvertures (5) délimitées par des bourrelets annulaires (4), caractérisé en ce que la gaine de renforcement tubulaire se compose d'un boudin réticulaire (2) en ce que la zone du boudin réticulaire, limitrophe de la surface extérieure de la tige creuse n'est soumise à aucune tension de rétraction et en ce que les bourrelets annulaires (4) sont obtenus par repoussement du matériau dans le sens de l'axe longitudinal.

2. Gaine de renforcement selon la revendication 1, caractérisée en ce qu'elle est réalisée dans un boudin réticulaire (2) en polyéthylène thermorétractible.

3. Procédé de fabrication d'une unité fonctionnelle (1) se composant d'une tige creuse (6) constituée d'un tyau souple plissé sur toute sa longueur et d'une gaine de renforcement tubulaire qui est réalisée dans un matériau thermorétractible sous une forme latente et qui enrobe la tige creuse (6) à l'exception de ses ouvertures frontales, laquelle tige creuse est glissée sur un mandrin qui est plus long qu'elle, avant d'être enrobée de la gaine de renforcement, qui dépasse la tige creuse aux deux extrémités, à la suite de quoi l'on expose les zones excédentaires à une source de chaleur qui provoque leur rétraction, caractérisé en ce que l'on enrobe la tige creuse (6) d'un boudin réticulaire (2) constituant une gaine de renforcement, en ce que l'on dirige sur les zones excédentaires une source de chaleur provoquant leur rétraction, en ce que l'on appuie ces zones excédentaires contre les faces frontales (7) de la tige creuse (6) et en ce que l'on extrait le mandrin de la cavité (8) de cette même tige creuse (6).

Fig. 1

0 004 638